# FASCICULE DE BREVET EUROPEEN

(11) **EP 2 296 774 B1**
(45) Date de publication et mention de la délivrance du brevet: **13.02.2019**
(21) Numéro de dépôt: 09769510.0
(22) Date de dépôt: 29.05.2009
(51) Int. Cl.: B01D 21/00, B01D 21/24, B01D 21/06

(54) **DISPOSITIF DE SEPARATION DES BOUES**
VORRICHTUNG ZUM TRENNEN VON SCHLAMM
DEVICE FOR SEPARATING SLUDGE

(30) Priorité: 29.05.2008 FR 0802920
(43) Date de publication de la demande: 23.03.2011
(73) Titulaire: Galichet, Gilles, 34750 Villeneuve-les-Maguelonne (FR)
(72) Inventeur: Galichet, Gilles, 34750 Villeneuve-les-Maguelonne (FR)
(74) Mandataire: Delaveau, Sophie
(86) Numéro de dépôt international: PCT/FR2009/051025
(87) Numéro de publication internationale: WO 2009/156669

(56) Documents cités:
- FR-A- 1 448 469
- GB-A- 2 066 232
- US-A- 3 216 573
- US-B1- 6 197 190

## Description

L'invention concerne un procédé de séparation de boues dans un décanteur ou dans un clarificateur.

L'invention concerne encore un dispositif de mise en oeuvre de ce procédé, conçu apte à être installé sur un décanteur ou un clarificateur existant.

L'invention concerne encore une station d'épuration comportant un tel dispositif.

L'invention concerne le domaine du traitement des effluents, en particulier dans des stations d'épuration.

Les stations d'épuration à boues activées comportent toutes, en aval de bassins d'activation et en fin de traitement, des clarificateurs.

Un clarificateur est destiné à séparer les boues, comportant des bactéries, provenant d'un bassin d'aération. Il recycle, au moins en partie, ces bactéries vers l'amont de la station d'épuration pour réensemencer les effluents qui rentrent. Le clarificateur envoie, encore, ces bactéries vers un concentrateur pour éliminer la production excédentaire.

Les eaux ainsi clarifiées peuvent alors retourner au milieu naturel.

La conduite des clarificateurs existants est toutefois délicate, et doit faire face à des incidents fréquents, tels que la remontée de boues en surface, ainsi que l'entraînement de boues vers le milieu naturel avec les eaux théoriquement clarifiées.

Plusieurs facteurs, qui peuvent interagir, sont à l'origine de ces incidents :
- des boues mal agglomérées entre elles ne se sédimentent pas ;
- le temps de séjour dans le clarificateur est trop long, et une réaction de dénitrification a commencé ;
- le clarificateur est sous-dimensionné, et la vitesse de passage dans le clarificateur est trop importante.

Les boues surnageantes sont un problème récurrent dans les stations d'épuration, dans lesquelles on tente en général de les précipiter et/ou de les dissoudre par arrosage, la plupart du temps sans grand effet.

Un autre remède souvent utilisé dans la conduite de stations d'épuration est l'utilisation de chlorure ferrique, pour tuer les bactéries, ou encore la constitution de lits de scories issues de l'élaboration de la fonte ou de l'acier lesquels lits sont à renouveler tous les deux ou trois ans. Dans les deux cas, le budget d'investissement ou/et de consommables est important, de l'ordre de 0,5€ par an et par équivalent-habitant, et il s'y rajoute le coût de traitement des déchets engendrés.

L'invention se propose de résoudre les problèmes de l'état de la technique en ce qui concerne la séparation des boues dans des décanteurs, ou des clarificateurs, ou similaires.

L'invention met en oeuvre un procédé améliorant le rendement des décanteurs, qu'ils soient utilisés comme clarificateurs, en floculation, en débourbage, ou pour la concentration de précipités et autres décantats en phase liquide.

En particulier, ce procédé a pour but de permettre l'agglomération des boues entre elles, pour autoriser une vitesse de passage élevée dans le clarificateur ou le décanteur, et ainsi y raccourcir le temps de séjour des boues.

A cet effet, l'invention concerne un procédé de séparation des boues dans un bassin clarificateur, caractérisé en ce qu'
- on capte les boues dans ledit bassin clarificateur ;
- on fait circuler les boues dans un flux à composante verticale à l'aide de premiers moyens statiques de guidage du courant ;
- on fait recirculer les boues sur elles-mêmes en cours de décantation de façon à augmenter la taille des flocs et permettre une précipitation de ces derniers plus rapide que la décantation naturelle;
- on fait recirculer les boues dans un courant centripète à l'aide de seconds moyens statiques de guidage des boues pour ramener les boues vers le centre du clarificateur.
- on soutire les boues du clarificateur.

L'invention concerne encore un dispositif apte à la mise en oeuvre du procédé selon l'une des revendications précédentes, conçu apte à être installé sur un bassin décanteur ou un clarificateur, comprenant un fond et à l'opposé du fond une surface, des injecteurs de boues et des premiers moyens de guidage vertical conçus aptes à créer un courant vertical caractérisé par le fait qu'il comporte des seconds moyens statiques de guidage des boues conçus aptes à entretenir des courants centripètes de recirculation des boues sur elles-mêmes.

Selon une caractéristique additionnelle de l'invention, le dispositif comporte encore des moyens de guidage complémentaires des boues qui comportent d'une part une première partie, qui s'étend sensiblement selon ladite direction et de façon convergente depuis le fond dudit clarificateur vers sa surface et comporte au moins une première ouverture à sa partie inférieure et une seconde ouverture à sa partie supérieure, et d'autre part une seconde partie disposée au-dessus de ladite première partie, et qui s'étend sensiblement selon ladite direction et de façon divergente depuis le fond dudit clarificateur vers sa surface et comporte au moins une première ouverture à sa partie inférieure et une seconde ouverture à sa partie supérieure conçus aptes à créer une circulation ascendante centrifuge des boues.

L'invention concerne encore une station d'épuration comportant un tel dispositif.

D'autres caractéristiques et avantages de l'invention apparaîtront à la lecture de la description qui va suivre, en référence aux figures annexées dans lesquelles :

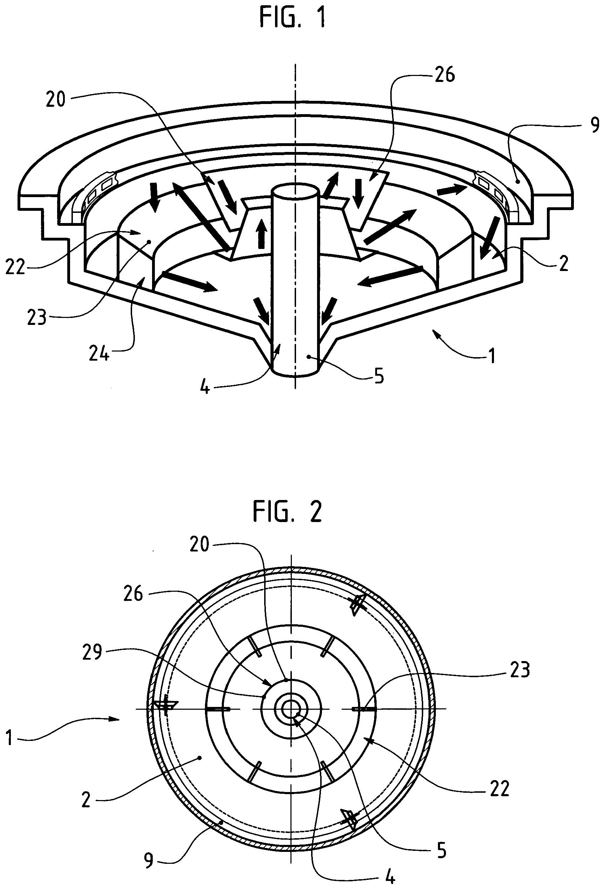

- la figure 1 représente, un schéma en 3D d'un clarificateur équipé d'un dispositif selon l'invention ;
- La figure 2 représente sous forme schématisée et en vue de dessus, un clarificateur équipé d'un dispositif selon l'invention ;
- la figure 3 représente, de façon schématisée et en perspective, un ensemble de panneaux assemblés que comporte un tel dispositif ;
- la figure 4 représente, de façon schématisée et en élévation, un clarificateur équipé du dispositif selon l'invention dans un premier mode de réalisation;
- la figure 5 représente, de façon schématisée et en élévation, un clarificateur équipé du dispositif selon l'invention selon un deuxième mode de réalisation;
- la figure 6 représente, de façon schématisée et en élévation, un clarificateur équipé du dispositif selon l'invention selon un mode d'exécution particulier;

L'invention concerne le domaine du traitement des effluents, en particulier dans des stations d'épuration.

Les stations d'épurations comprennent un ou plusieurs clarificateur 1 composé habituellement d'un bassin 2 comportant un fond 3, un puits technique 4 se présentant sous la forme d'une colonne verticale 5 dont la partie inférieure est solidaire du fond du clarificateur 1 et la partie supérieure est préférentiellement émergée de la surface du bassin 2 sur laquelle on vient fixer un pont racleur 6.

Le clarificateur comprend encore un tuyau 7 d'arrivée des boues provenant d'un bassin d'aération, un tuyau 8 d'évacuation des boues, un déversoir 9.

Il comprend des premiers moyens de guidage 10 sous forme d'une jupe verticale 11 de circulation des boues, communément appelée « Clifford », rabattant vers le bas les boues injectées du bassin d'aération.

Pour la mise en oeuvre du procédé, selon l'invention, on utilise un dispositif de circulation de l'eau 20 conçu apte à être installé sur un décanteur ou un clarificateur 1 existant.

Tout particulièrement un tel dispositif 20 de circulation de l'eau installé dans un clarificateur 1 comprenant un fond et à l'opposé du fond une surface, des injecteurs de boues et des premiers moyens de guidage vertical 10 conçus aptes à créer un courant vertical descendant et centrifuge des boues caractérisé par le fait qu'il comporte des seconds moyens statiques de guidage 22 des boues conçus aptes à entretenir des courants centripète de recirculation des boues sur elles-mêmes.

Tout particulièrement ces seconds moyens statiques de guidage 22 sont composés d'un ensemble de jupes 23 sous formes de secteurs circulaires concentriques formant les chemins hydraulique.

Préférentiellement ces jupes 23 constituent une ou plusieurs ceintures verticales ou sensiblement coniques comportant un passage en partie inférieure, qui est suffisamment dimensionné pour laisser circuler un flux.

Avantageusement les jupes 23 sont disposées de façon conique afin de favoriser les courants de circulation des boues et des eaux chargées.

Tout particulièrement les jupes 23 sont disposées à différentes hauteurs par rapport à la surface du bain dans ledit décanteur ou clarificateur, et fixées sur le fond de ce dernier, et/ou sur le pont racleur qu'il comporte.

Préférentiellement, la partie inférieure des jupes 23 est à distance du fond dudit décanteur ou clarificateur 1, de façon à permettre la circulation du liquide et des boues sous lesdites jupes 23. Pour ajuster la hauteur de ces jupes 23 dans le bassin du clarificateur 1, elles peuvent être supportées par des moyens d'ancrage 24 tels que des piquets ou des piliers reposant au fond du bassin du clarificateur, ou encore suspendues, soit à une charpente spécifique, soit à des flotteurs stabilisés.

Selon le mode préféré de l'invention les jupes 23 peuvent être lestées ou autoportantes pour permettre un montage et un démontage sur le clarificateur 1 sans aucune modification de celui-ci.

Tout particulièrement la partie supérieure des panneaux formant jupes 23 est à un niveau inférieur par rapport au niveau de déversement calé par le déversoir, de manière à ce que les courants hydrauliques engendrés aient une composante horizontale qui permette de multiples retours des flocs libres vers le courant principal en fond de décanteur, ou encore en surface selon les cas.

Avantageusement les jupes 23 sont constituées de panneaux déflecteurs réalisés préférentiellement en matériaux satisfaisant aux conditions d'utilisations du dispositif 20, notamment ils doivent être imputrescibles et résistants aux rayons ultra-violets.

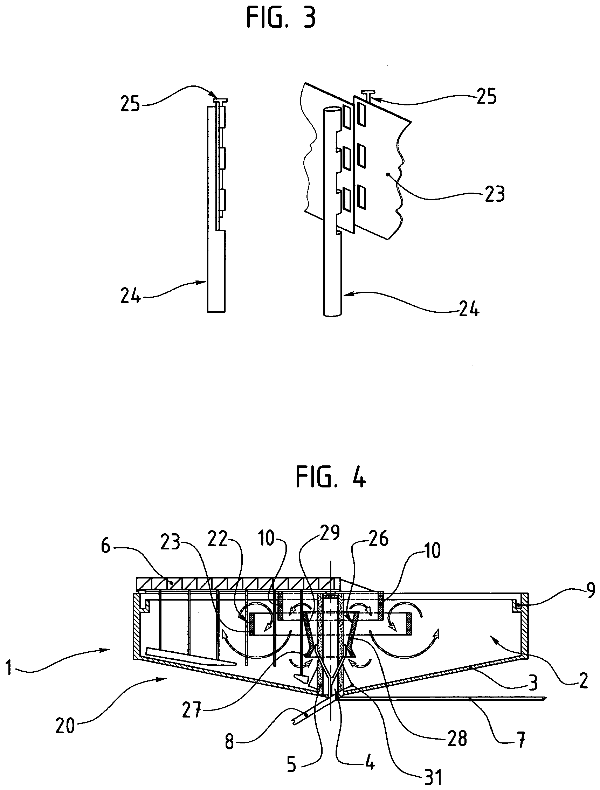

Tel que visible sur la figure 3, ces panneaux comportent des lumières conçues aptes à s'encastrer avec des lumières présentes sur les moyens d'ancrage 24 et maintenus solidaires par un élément de clavetage 25.

Ainsi constituées, les jupes 23, sont disposées selon des géométries adaptées aux volumes des décanteurs, de façon à entretenir des courants de recirculation des décantats sur eux-mêmes et de manière à provoquer l'agrégation des flocs entre eux par contacts répétés. Ainsi alourdies, les particules augmentent leur vitesse de sédimentation ce qui permet une accélération du passage du liquide dans le décanteur.

Préférentiellement les seconds moyens statiques de guidage 21 sont associés à des moyens de guidages complémentaires 26 qui comportent d'une part une première partie 27, qui s'étend sensiblement selon ladite direction et de façon convergente depuis le fond dudit clarificateur vers sa surface et comporte au moins une première ouverture à sa partie inférieure et une seconde ouverture à sa partie supérieure, et d'autre part une seconde partie 28 disposée au-dessus de ladite première partie, et qui s'étend sensiblement selon ladite direction et de façon convergente depuis le fond dudit clarificateur vers sa surface et comporte au moins une première ouverture à sa partie inférieure et une seconde ouverture à sa partie supérieure conçus aptes à créer une circulation ascendante centrifuge des boues.

En particulier ces moyens de guidage complémentaires 26 peuvent venir s'adapter aux différents circuits hydrauliques et se placer autour de la colonne 5.

Avantageusement ces moyens de guidage complémentaires 26 sont constitués par un concentrateur central 29, se présentant sous la forme d'une surface biconique en forme de diabolo, placé à une hauteur comprise entre le fond 3 et la surface du bassin 2 de manière à permettre une recirculation des boues par la partie supérieure ou la partie inférieure du concentrateur 29.

Tout particulièrement cette surface biconique creuse favorise l'accélération des flux et engendre, dans la partie inférieure de ce concentrateur central 29, un tourbillon entraînant les bourbes et les flocs trop légers non agglomérés entre eux, vers l'arrivée du liquide primaire à décanter. Ainsi mises en contact avec le liquide chargé entrant, les particules ont la possibilité de s'intégrer aux amas de flocs déjà constitués.

Tel que visible sur la figure 4 la surface biconique engendre des courants de recirculation qui entrainent les flocs non coagulés dans une nouvelle boucle hydraulique et, de ce fait, provoque leur agrégation aux flocs émis par l'injecteur.

Selon un autre mode de réalisation ces moyens statiques de guidage complémentaires comporte deux troncs de cône ou similaire coaxiaux et de sens d'ouverture contraires selon un axe sensiblement vertical.

Selon un premier mode de réalisation et tel que visible sur la figure 4, les seconds moyens statiques de guidage 22 des boues sont situés entre les moyens statiques de guidage complémentaires 26 et les premiers moyens statiques de guidage 10 du bassin 2 du clarificateur 1. Cette disposition entraîne la création d'un courant de recirculation centrifuge au niveau de la partie supérieure des jupes 23 et d'un courant de retour, ayant un effet centripète, en partie inférieur des jupes 23.

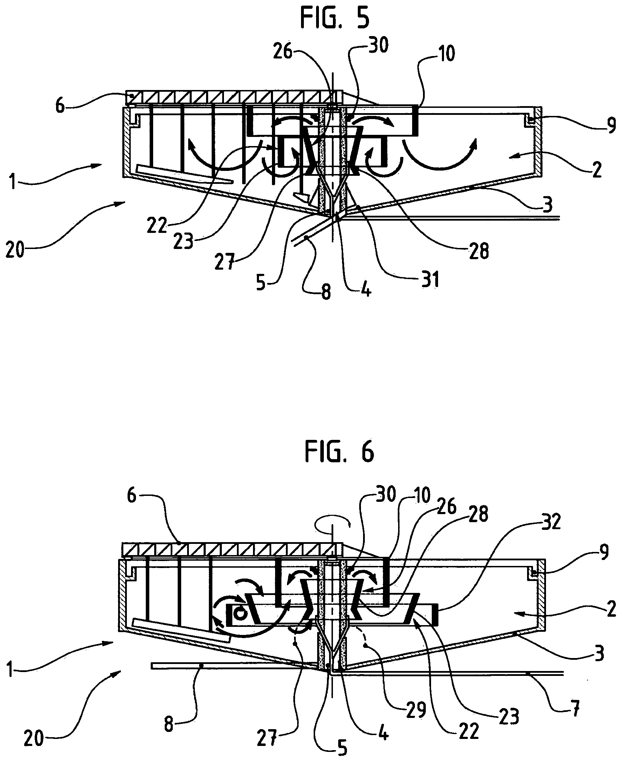

Selon un deuxième mode de réalisation et tel que visible sur la figure 5, les seconds moyens statiques de guidage 22 des boues sont situés, cette fois-ci, entre les premiers moyens statiques de guidage 10 et les bords du bassin 2. Dans cette configuration le circuit hydraulique suit un courant de recirculation centrifuge au niveau de la partie inférieure des jupes 23 et un courant de retour, ayant un effet centripète, au niveau de la partie supérieure des jupes 23.

Selon un mode particulier de l'invention et tel que visible sur la figure 6 le dispositif 20 peut encore comporter des jupes 32 secondaires venant se placé entre le bord du bassin 2 et les jupes 23. Elles permettent de créer un second courant centripète des boues, améliorant de ce fait la sédimentation de celles-ci.

Tel que visible sur les figures 4 et 5 le dispositif 20 peut encore avantageusement comporter des déflecteurs 30. Ces déflecteurs 30 sont placés à l'extrémité supérieure de la colonne 5 mais sous la surface du bassin 2. Ils se présentent sous la forme d'une surface partiellement torique créant un meilleur contre-courant inférieur centripète favorisant la concentration des boues.

Préférentiellement le dispositif comprend également une palette 31 conique placée dans le fond 3 du bassin 2 autour de la colonne 5 qui permet de répartir le point d'action de l'aspiration de la boue par le tuyau d'évacuation des boues 8 pour limiter les effets de cône de prélèvement.

Avantageusement ce dispositif 20 peut être complété, si nécessaire, par un système de récupération des boues par mise en rotation des décantats. Ainsi une force hydraulique induite, soit par la force du débit du liquide primaire à décanter, soit par un système de pompe de circulation, engendre une force tangentielle au niveau des boues décantées et les fait tourner de manière à être en permanence reprises par un système de soutirage. Ainsi est évité le phénomène de formation de cône de prélèvement observé usuellement dans les silos de boues et les décanteurs soutirés en partie basse ou par siphonage.

Selon un seconde mode de réalisation qui porte sur la nature du principe de mise en rotation des boues en fond de décanteur la plupart des boues des clarificateurs sont soutirées sur des points fixes ou semi-mobiles liés en partie basse à des ponts racleurs. Dans ces conditions il convient, de façon à prévenir la formation de renards ou de cônes dans les boues, de mettre en rotation la masse à soutirer. On utilise alors avantageusement un ou plusieurs systèmes de pompes de circulation puisant le débit nécessaire dans la masse de la boue, et la faisant tourner dans un plan horizontal par un effet tangentiel lié à l'orientation de la buse de sortie. Ces appareils peuvent être remplacés par des moteurs munis de pales spécifiquement conçus pour ce type d'application.

L'invention concerne encore un procédé de séparation des boues dans un bassin clarificateur, caractérisé en ce qu'
- on capte les boues dans ledit bassin clarificateur ;
- on fait circuler les boues dans un flux à composante verticale à l'aide de premiers moyens statiques de guidage du courant ;
- on fait recirculer les boues sur elles-mêmes en cours de décantation de façon à augmenter la taille des flocs et permettre une précipitation de ces derniers plus rapide que la décantation naturelle;
- on fait recirculer les boues dans un courant centripète à l'aide de seconds moyens statiques de guidage des boues pour ramener les boues vers le centre du clarificateur.
- on soutire les boues du clarificateur.

Selon une étape additionnelle de ce procédé pour faire circuler les boues dans ledit bassin, on soumet tout ou partie du flux de boues, d'une part à des mouvements ascendants centrifuges à l'aide de premiers moyens statiques de guidage orientés axialement, et d'autre part à des mouvements descendants centripètes à l'aide de seconds moyens statiques de guidage orientés sensiblement de manière tangente à des cylindres ou cônes de révolution autour d'un axe sensiblement verticale autour duquel se développe ledit clarificateur.

Selon une autre étape additionnelle on favorise l'accélération des flux et on engendre un tourbillon entraînant les bourbes et les flocs trop légers à l'aide de moyens statiques de guidage complémentaires.

Selon une autre étape on force le flux à passer, selon une direction radiale, alternativement au-dessus et au-dessous d'obstacles ménagés sur sa trajectoire.

De façon avantageuse on fait tourbillonner le flux au voisinage d'un axe de rotation que comporte ledit clarificateur.

Dans une variante de l'invention on crée un étranglement du flux créant les conditions d'un flux tourbillonnaire au voisinage de ladite colonne à l'aide de la partie inférieure des moyens statiques de guidage complémentaires, lequel est dans sa partie la plus étroite suffisamment rapproché de ladite colonne.

Dans une autre variante de l'invention on fait tourbillonner le flux au voisinage d'un axe de rotation que comporte un pont racleur équipant ledit clarificateur.

L'invention concerne encore une station d'épuration comportant un tel dispositif.

En somme le clarificateur 1 selon l'invention comporte des moyens statiques qui autorisent son fonctionnement de façon autonome sans aucun mécanisme. Naturellement les moyens statiques selon l'invention peuvent être combinés avec des moyens dynamiques tels qu'un pont racleur que comporte ledit clarificateur 1.

## Revendications

1. Clarificateur comprenant un dispositif apte à être installé dans le dit clarificateur (1), lequel clarificateur comporte un centre et un fond (3), lequel clarificateur conçu apte à établir en service une surface des boues à l'opposé du fond, des moyens d'apport de boues et des premiers moyens statiques sous forme de jupe verticale (10), situés en partie supérieure du dit clarificateur (1) et conçus aptes à rabattre vers le bas les boues injectées, **caractérisé par le fait que** le dit dispositif comporte d'une part des seconds moyens statiques de guidage des boues (22) concentriques, composés d'un ensemble de jupes (23) sous forme de secteurs circulaires concentriques dont la partie inférieure est à distance du fond du clarificateur (1) et située sous les premiers moyens statiques de guidage (10), les dits seconds moyens statiques de guidage des boues (22) étant conçus aptes à entretenir des courants de recirculation des boues sur elles-mêmes, et d'autres part des moyens statiques de guidage complémentaires des boues (26) concentriques et situés autour d'une colonne verticale centrale (5) et qui comportent d'une part une premier partie (27), qui s'étend sensiblement de façon convergente depuis le fond dudit clarificateur vers sa surface et comporte au moins une première ouverture à sa partie inférieure et une seconde ouverture à sa partie supérieure, et d'autre part une seconde partie (28) disposée au-dessus de ladite première partie, et qui s'étend de façon divergente depuis le fond dudit clarificateur vers sa surface et comporte au moins une première ouverture à sa partie inférieure et une seconde ouverture à sa partie supérieure conçus aptes à créer une circulation ascendante des boues.

2. Clarificateur selon la revendication 1, **caractérisé par le fait que** les moyens statiques de guidage complémentaires (26) sont constitués par deux tronc de cône ou similaire coaxiaux et de sens d'ouverture contraires selon un axe sensiblement vertical.

3. Clarificateur selon la revendication 2, **caractérisé par le fait que** lesdits moyens statiques de guidage complémentaires (26) sont en forme de diabolo.

4. Clarificateur selon l'une des revendications 2 et 3, **caractérisé par le fait que** lesdits seconds moyens statiques de guidage (22) sont des panneaux comportant des lumières conçues aptes à s'encastrer avec des lumières présente sur les moyens d'ancrage (24) et maintenus solidaires par un élément de clavetage (25).

5. Station d'épuration comportant un clarificateur selon l'une des revendications 1 à 4.

## Patentansprüche

1. Klärbecken, umfassend eine Vorrichtung, die geeignet ist, in dem Klärbecken (1) installiert zu werden, wobei das Klärbecken einen Mittelbereich und einen Boden (3) umfasst, wobei das Klärbecken eingerichtet ist, um während des Betriebs eine Schlammfläche gegenüber dem Boden herzustellen, Zuführmittel des Schlamms und erste statische Mittel in Form einer vertikalen Schürze (10), die sich im oberen Teil des Klärbeckens (1) befinden und eingerichtet sind, um den eingeleiteten Schlamm nach unten umzuschlagen, **dadurch gekennzeichnet, dass** die Vorrichtung einerseits zweite statische konzentrische Schlammführungsmittel (22) umfasst, die aus einer Gesamtheit von Schürzen (23) in Form von konzentrischen Kreissektoren gebildet sind, deren unterer Teil sich in einem Abstand zum Boden des Klärbeckens (1) und unter den ersten statischen Führungsmitteln (10) befindet, wobei die zweiten statischen Schlammführungsmittel (22) eingerichtet sind, um Rücklaufströmungen des Schlamms auf sich selbst zu erhalten, und andererseits komplementäre statische konzentrische Schlammführungsmittel (26), die sich um eine vertikale Mittelsäule (5) herum befinden und die einerseits einen ersten Teil (27), der sich im Wesentlichen konvergierend vom Boden des Klärbeckens zu seiner Oberfläche erstreckt und mindestens eine erste Öffnung in seinem unteren Bereich und eine zweite Öffnung in seinem oberen Bereich umfasst, und andererseits einen zweiten Teil (28) umfassen, der über dem ersten Teil angeordnet ist und sich divergierend vom Boden des Klärbeckens bis zur Oberfläche erstreckt und mindestens eine erste Öffnung in seinem unteren Bereich und eine zweite Öffnung in seinem oberen Bereich umfasst, die eingerichtet sind, eine aufsteigende Zirkulation des Schlamms zu erzeugen.

2. Klärbecken nach Anspruch 1, **dadurch gekennzeichnet, dass** die komplementären statischen Führungsmittel (26) von zwei koaxialen Kegelstümpfen oder dergleichen mit entlang einer im Wesentlichen vertikalen Achse entgegengesetzten Öffnungsrichtungen gebildet sind.

3. Klärbecken nach Anspruch 2, **dadurch gekennzeichnet, dass** die komplementären statischen Führungsmittel (26) diaboloförmig sind.

4. Klärbecken nach einem der Ansprüche 2 und 3, **dadurch gekennzeichnet, dass** die zweiten statischen Führungsmittel (22) Platten sind, umfassend Öffnungen, die eingerichtet sind, sich in Öffnungen, die auf den Verankerungsmitteln (24) vorhanden sind, einzufügen, und die durch ein Befestigungselement (25) gehalten werden.

5. Kläranlage, umfassend ein Klärbecken nach einem der Ansprüche 1 bis 4.

## Claims

1. Clarifier comprising a device capable of being installed in said clarifier (1), which clarifier comprises a centre and a bottom (3), which clarifier is designed to be able to establish in service a surface of the sludge opposite the bottom, sludge input means and first static means in the form of a vertical skirt (10), situated in the upper part of said clarifier (1) and designed to be able to depress the injected sludge, **characterized in that** said device comprises, on the one hand, concentric second static sludge guiding means (22), composed of a set of skirts (23) in the form of concentric circular segments whose lower part is at a distance from the bottom of the clarifier (1) and situated under the first static guiding means (10), said second static sludge guiding means (22) being designed to be able to maintain currents for recirculating the sludge on itself, and, on the other hand, complementary concentric static sludge guiding means (26) situated around a central vertical column (5) and which comprise, on the one hand, a first part (27), which extends in a substantially convergent manner from the bottom of said clarifier to its surface and comprises at least a first opening in its lower part and a second opening in its upper part, and, on the other hand, a second part (28) positioned above said first part, and which extends in a divergent manner from the bottom of said clarifier to its surface and comprises at least a first opening in its lower part and a second opening in its upper part designed to be able to create an upwards circulation of the sludge.

2. Clarifier according to Claim 1, **characterized in that** the complementary static guiding means (26) consist of two truncated cones or the like that are coaxial and of opposing directions of opening along a substantially vertical axis.

3. Clarifier according to Claim 2, **characterized in that** said complementary static guiding means (26) are in the form of a dolly.

4. Clarifier according to one of Claims 2 and 3, **characterized in that** said second static guiding means (22) are panels comprising ports designed to be able to be embedded with ports present on the anchoring means (24) and secured to one another by a keying element (25) .

5. Purifying station comprising a clarifier according to one of Claims 1 to 4.
